# EUROPÄISCHE PATENTSCHRIFT

(11) **EP 0 548 631 B1**
(45) Veröffentlichungstag und Bekanntmachung des Hinweises auf die Patenterteilung: **26.03.1997**
(21) Anmeldenummer: 92120730.4
(22) Anmeldetag: 04.12.1992
(51) Int. Cl.: C05F 17/02

(54) **Vorrichtung zum Zerkleinern und Kompostieren von in losen Haufen aufgeschichteten, organischen Abfall-Materialien und Verfahren hierzu**
Device for shreading and composting organic waste materials in windrows and process thereof
Dispositif et procédé de broyage et compostage des matériaux organiques de déchets entassés

(30) Priorität: 20.12.1991 DE 4142135
(43) Veröffentlichungstag der Anmeldung: 30.06.1993
(73) Patentinhaber: J. WILLIBALD GMBH Maschinenfabrik, D-88639 Wald (DE)
(72) Erfinder: Willibald, Josef, W-7771 Frickingen 2/Altheim (DE)
(74) Vertreter: Seemann, Norbert W., Dipl.-Ing.

(56) Entgegenhaltungen:
- AT-B- 394 298
- DE-A- 3 641 537
- DE-U- 9 006 637

## Beschreibung

Die Erfindung betrifft ein Verfahren zum Zerkleinern von in losen Haufen aufgeschichteten organischen Materialien nach dem Oberbegriff des Anspruches 1 sowie eine Vorrichtung zur Durchführung des Verfahrens nach dem Oberbegriff des Anspruches 4.

Aus der DE-U-90 06 637 ist ein Umsetzgerät für Schüttgut bekannt, mit dem vorzerkleinerte Garten- und Grünabfälle, die zu einer Miete aufgeschüttet sind, umgesetzt werden können, um den Rotteprozeß des kompostierbaren Abfallmaterials zu unterstützen. Das Umsetzgerät besteht aus einer etwa vertikal ausgerichteten, zinkenbesetzten Fräswalze, die motorisch angetrieben im Betrieb des Geräts das Material der Miete seitlich abgreift. Das Material wird daraufhin seitwärts über eine Förderschnecke einem Austragförderband zugeführt und zu einer neuen Miete aufgeworfen.

Das Umsetzgerät eignet sich nur zur Umsetzung und Umschichtung von bereits zu einer Miete aufgehäuften Materials zu einer neuen Miete. Es ist aber nicht möglich, das oftmals in Großteilen vorliegende Ausgangsmaterial zu zerkleinern, um den Kompostierprozeß zu beschleunigen oder erst zu ermöglichen. Der Zerkleinerungsvorgang muß bei Erstellung der ersten Miete mit einer zusätzlichen Vorrichtung durchgeführt werden, wodurch ein hoher Kostenaufwand für die Anschaffung und Wartung solcher Geräte entsteht, verbunden mit großem Arbeitszeitaufwand und Personal bedarf. Die einzelnen Verfahrensschritte zur Herstellung und Umsetzung einer Miete sind zeitlich auseinandergezogen und oft nicht aufeinander abgestimmt, so daß ein notwendiger Arbeitsprozeß nicht zuverlässig zum vorgesehenen Zeitpunkt durchgeführt werden kann.

Der Erfindung liegt die Aufgabe zugrunde, ein Verfahren und eine Vorrichtung zum Zerkleinern organischen Materials anzugeben, das dazu geeignet ist, alle für die Kompostierung organischen Abfallmaterials notwendigen Arbeitsschritte mit nur einem Aggregat bzw. einer entsprechenden maschinellen Vorrichtung durchführen zu können,

Diese Aufgabe wird bei dem erfindungsgemäßen Verfahren mit den Merkmalen des Anspruches 1 und bei der Vorrichtung mit den Merkmalen des Anspruches 4 gelöst. Die zugehörigen Unteransprüche beinhalten hierzu vorteilhafte Weiterbildungen des erfinderischen Grundgedankens, der durch entsprechende Verfahrensablauf- und Geräte-Skizzen zeichnerisch angedeutet und anhand dieser Zeichnungen im folgenden noch näher erläutert ist. Es zeigen:
- Fig. 1: das neue Kombinationsgerät zu Beginn der Bearbeitung des rottefähigen Ausgangsmaterials als schematische Draufsicht auf einen entsprechenden Deponieplatz,
- Fig. 2: eine ebenfalls schematische Vorder-Ansicht auf die wesentlichen tungsorgane und
- Fig. 3: eine Seitenansicht zu Fig. 2.

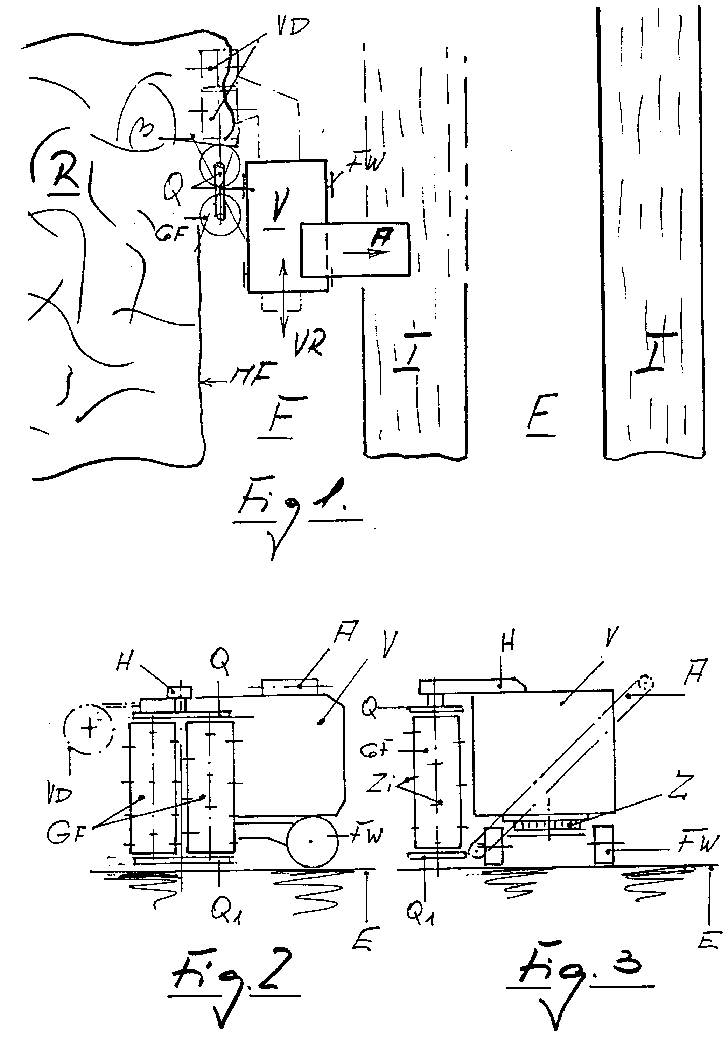

In losen Haufen in einer Rottehalle oder auf einem unüberdachten Deponieplatz aufgeschichtetes organisches Abfallmaterial "R" wird zum Zwecke der Herstellung von Kompost oder von Abdeckmaterial für Neuanpflanzungen, wie aus Fig. 1 bis 3 ersichtlich, in folgenden generellen Grund-Schritten mit einer einzigen maschinellen Vorrichtung "V" bearbeitet:
a. Verwendung einer motorisch angetriebenen, zum Abfallmaterial hinfahrenden, maschinellen Vorrichtung "V" mit daran angebauten hochtourig laufenden Geräten "GF" zum Zerkleinern des Abfalls bei mehrmaliger Fahrt entlang derselben Spur "F" mit gleichzeitiger Ablage und Aufschichtung des zerkleinerten Materials seitlich zur Fahrspur"F" übereinander bis zum Erreichen der gewünschten Höhe mehrerer,z.B. trapezförmiger mit Abstand nebeneinander liegender Mieten I.
b. Nach Ablauf einer bestimmten Rottezeit werden mindestens einmal die aufgeschichteten Mieten I umgesetzt, und zwar mit der gleichen Maschine "V" und deren Zerkleinerungswerkzeugen "GF" bei niedrigerer Drehzahl letzterer bei wiederum seitlicher Ablage des Materials zur Fahrspur "F" und gleichzeitiger Aufschichtung neuer Mieten I, vorzugsweise jeweils auf der der umzusetzenden Miete gegenüberliegenden Seite der früheren Miete.

Wesentlich hierbei ist zudem eine zusätzliche, maschinelle Vorverdichtung des in losen Haufen auf dem Boden liegenden Ausgangsmaterials "R" mit entsprechenden Arbeitswerkzeugen "VD" derselben Vorrichtung "V" vor dem Aufnehmen und Zuführen des Materials "R" zu den hochtourig laufenden Fräs- und Zerkleinerungsorganen "GF" der maschinellen Vorrichtung "V" sowie Arbeit derselben in Vorwärts- und Rückwärtsfahrt "VR" entlang und fortschreitend parallel versetzt zu der gleichen Fahrspur "F".

Durch den Vorverdichter "VD" wird dabei erreicht, daß das Ausgangsmaterial "R" gleichmäßig von den Fräswalzen "GF" abgefräst wird und nicht in unkontrollierbaren Haufen, die zu einer Blockierung der Fräsorgane "GF" führen könnten, anfällt; durch die Vor- und Rückwärtsfahrt bei der Bearbeitung kann auf engstem Raum zudem wirtschaftlich operiert werden, da kein sonst ungenützter Platz für das Wenden der Maschine "V" benötigt wird.

Während die zuvor beschriebenen Verfahrensschritte bereits für die Herstellung von Abdeckmaterial ausreichen, kann es für die Schaffung von Feinkompost noch von weiterem Vorteil sein, wenn beim Umsetzen der Miete zugleich eine Absiebung samt Absackung des bereits vorhandenen Feinkompostes vorgenommen wird bei gleichzeitiger intensiver Nachzerkleinerung des noch unverrotteten Restmaterials und erneuter Aufschichtung desselben wiederzum zu parallelen Mieten I.

Die zuvor beschriebene, motorisch angetriebene Vorrichtung zeichnet sich dabei in ihrem grundlegenden Aufbau weiterhin dadurch aus, daß die fest am Gerät "V" angebauten Aufnahme-, Zuführ- und Zerkleinerungsaggregate "GF" für das frische bzw. angerottete Abfallmaterial in ihrem Neigungswinkel zur Fahrspur verstellbar sind. Das seitwärts aus der Fahrspur weisende, umlaufende Austragsband "A" für das zerkleinerte Gut zum Aufschichten einer Miete und die nicht dargestellte Absieb- und Absackeinrichtung, können als vorzugsweise nur bei Bedarf anbaubare bzw. zuschaltbare Zusatzgeräte ausgebildet sein.

Alle Aggregate sind vorzugsweise mit hydraulischem Antrieb versehen. Wesentlich ist hierbei auch noch, daß die Zerkleinerungsorgane "GF" als gegenläufig arbeitendes, um weitestgehend vertikal, jedoch neigbar gerichtete Achsen umlaufend angetriebenes, mit Zinken als Mitnehmer besetztes Fräswalzenpaar ausgebildet, an einem gemeinsamen Querjoch "Q" verschwenkbar gelagert und in seinem Anstellwinkel "β" zur seitlichen Gut- bzw. Mietenflanke "MF" veränderbar an der maschinellen Gesamtvorrichtung "V" angeordnet ist; für die Arbeit bei Vorwärts- und bei Rückwahrtsfahrt ist somit jeweils der günstigste Anstellwinkel der Fräsorgane "GF" zur seitlichen Gut- bzw. Mietenflanke "MF" zu erreichen.

Der Vorverdichter "VD" kann zudem als in Fahrtrichtung "VR" jeweils vor oder auf gleicher Höhe oberhalb der Fräswalzen "GF" liegende, angetriebene oder von selbst mitlaufende Andrückwalze ausgebildet sein. Anstelle der Verschwenkung der Fräsorgane "GF" mittels Haltearm "H" und oberem sowie unterem Querjoch (Q und Q₁) ist es auch denkbar, die gesamte Vorrichtung "V" beispielsweise über einen Zahnkranz (Z) schwenkbar auf einem Räder- bzw. Raupenfahrwerk "FW" zu lagern oder aber in hängender Form bei Hallenkompostierung an einer Kranbrücke drehbar zu befestigen.

### Bezugsziffernverzeichnis

- A: Austragband
- E: Deponieplatz, Rotteplatz
- F: Fahrspur
- FW: Fahrwerk
- GF: Fräs- und Zerkleinerungsaggregat
- MF: Mietenflanke
- H: Tragarm
- Q: Querjoch (oben)
- Q₁: Querjoch (unten)
- β: Anstellwinkel
- R: Ausgangsmaterial, Rohmaterial
- V: maschinelle Gesamtvorrichtung
- VD: Vorverdichter
- VR: Vorwärts-, Rückwärtsfahrt
- Z: Zahnkranz
- I: parallele Mieten aus zerkleinertem Ausgangsmaterial "R"

## Patentansprüche

1. Verfahren zum Zerkleinern von in losen Haufen aufgeschichteten, organischen Materialien (R) zum Zwecke der Kompostierung oder Herstellung von Abdeckmaterial für Begrünungsflächen,
**gekennzeichnet durch**
folgende, nacheinander ablaufende Verfahrensschritte:
a) maschinelle Vorverdichtung der in losen Haufen auf dem Boden liegenden Materialien (R) mit entsprechenden Arbeitswerkzeugen (VD) einer motorisch angetriebene, zu den Materialien hinfahrenden, maschinellen Vorrichtung (V) mit daran angebauten, **hochtourig** laufenden Fräs- und Zerkleinerungsorganen (GF) zum **Zerkleinern** der Materialien bei mehrfacher Fahrt entlang und fortschreitend parallel versetzt zu derselben Fahrspur (F) mit gleichzeitiger Ablage und Aufschichtung der zerkleinerten Materialien seitlich zur Fahrspur (F) übereinander bis zum Erreichen einer gewünschten Mietenhöhe (1, II, ...).
b) Nach Ablauf einer bestimmten Rottezeit mindestens einmaliges Umsetzen der aufgeschichteten Mieten (1, II, ...) mit der gleichen Vorrichtung (V) und deren Fräs- und Zerkleinerungsorganen (G) **bei niedrigerer Drehzahl** letzterer und wiederum seitlicher Ablage der Materialien zur Fahrspur (F) bei gleichzeitiger Aufschichtung einer Miete (I, II, ...) auf der den Fräs- und Zerkleinerungsorganen (GF) gegenüberliegenden Seite.

2. Verfahren nach Anspruch 1,
**gekennzeichnet durch**
Arbeit der maschinellen Vorrichtung (V) in Vorwärts- und in Rückwärtsfahrt (VR) entlang der Fahrspur (F).

3. Verfahren nach den Ansprüchen 1 und 2,
**dadurch gekennzeichnet**,
daß das Umsetzen der Miete gemäß Patentanspruch 1 b) durch seitliches Entlangfahren längs der Mieten (I, II, ...) erstmals nach etwa der Hälfte der Rottezeit und jeweils während der Fahrt der maschinellen Vorrichtung erfolgt und zugleich eine Absiebung samt Absackung des bereits vorhandenen Feinkompostes vorgenommen wird bei gleichzeitig intensiver Nachzerkleinerung der noch unverrotteten Materialien und erneuter Aufschichtung derselben wiederum zu einer Miete.

4. Vorrichtung zur Durchführung des Verfahrens nach den vorhergehenden Ansprüchen,
gebildet durch eine motorisch angetriebene, maschinelle Vorrichtungseinheit mit daran angebauten, um weitestgehend vertikale Drehachsen umlaufenden Fräsorganen für die zu bearbeitenden Materialien,
sowie einem den Fräsorganen nachgeordneten, seitwärts aus der Fahrspur weisenden, umlaufenden Austragförderband für das Aufschichten der zerkleinerten Materialien zu einer Miete,
**dadurch gekennzeichnet**,
daß den Fräsorganen (GF) ein Vorverdichtungsaggregat (VD) vorgeschaltet ist, daß die Fräsorgane (GF) als gegenläufig antreibbares, zinkenbesetztes **Fräswalzenpaar** ausgebildet und an einem gemeinsamen Querjoch (Q, Q1) seitlich zu der maschinellen Gesamtvorrichtung an dieser angeordnet und in ihrem Anstellwinkel (β) zur seitlichen Materialien- bzw. Mieteinflanke (MF) veränderbar sind.

5. Vorrichtung nach Anspruch 4,
**dadurch gekennzeichnet**,
daß das Querjoch aus einem oberen (Q) und unteren (Q₁) plattenförmigen Rahmen besteht, in welchem die Achsen der Fräswalzen (GF) gelagert sind.

6. Vorrichtung nach den Ansprüchen 4 und 5,
**gekennzeichnet dadurch**, daß
der Vorverdichter (VD) als in der jeweiligen Fahrtrichtung (VF) der Vorrichtung (V) vor sowie auf gleicher Höhe oder oberhalb des Fräwalzenpaares (GF) liegende, motorisch angetriebene oder von selbst mitlaufende Andrückwalze ausgebildet ist.

7. Vorrichtung nach den Ansprüchen 4 bis 6,
**gekennzeichnet durch**
Ausbildung mindestens eines Teils aller Aggregate mit hydraulischem Einzelantrieb und/oder Keilriemen- bzw. Kettenantriebsverbindungen zu einem Zentralantrieb, wobei die Walzen des Fräs- und Zerkleinerungsaggregats (GF) beim Fräsen schnelllaufend und beim Umsetzen von Mieten (I) langsam laufend angetrieben sind.

8. Vorrichtung nach mindestens einem der vorhergehenden Ansprüche,
**dadurch gekennzeichnet**,
daß anstelle der Verschwenkung des an einem Haltearm (H) an der Gesamtvorrichtung (V) gelagerten Querjochs (Q, Q₁) die Gesamtvorrichtung (V) über einen Zahnkranz (Z) schwenkbar auf einem Räder- oder Raupenfahrwerk (FW) aufgesetzt ist.

9. Vorrichtung nach mindestens einem der vorhergehenden Ansprüche,
**gekennzeichnet durch**
Anbringung und Führung von Querjoch (Q, Q₁) samt Fräswalzen (GF) in hängender Bauweise an einer Kranbrücke.

## Claims

1. Method of comminuting organic materials (R), which have been layered in loose heaps, for the purpose of composting or production of covering materials for germinating surfaces, characterised by the following method steps elapsing one after the other:
a) mechanical preliminary compacting of the materials (R), which are lying in loose heaps on the ground, by corresponding working tools (VD) of a motor-driven mechanical device (V) which is driven up to the materials, with milling elements and comminuting elements (GF), which are attached thereto and run at high speed, for the comminution of the materials on multiple travel along and continuously parallelly displaced relative to the same track (F) with simultaneous deposition and layering of the comminuted materials laterally relative to the track (F) above one another until attainment of a desired stack height (I, II, ...).
b) After elapsing of a specific decomposition time, turning of the layered stacks (I, II, ...) at least once by the same device (V) and the milling elements and comminuting elements (G) at lower rotational speed of the latter and further lateral deposition of the materials relative to the track (F) with simultaneous layering of a stack (I, II, ...) on the side opposite to the milling elements and comminuting elements (GF).

2. Method according to claim 1, characterised by operation of the mechanical device (V) in forward travel and rearward travel (VR) along the track (F).

3. Method according to claims 1 and 2, characterised therey that the turning of the stack according to claim 1b) by driving along the stacks (I, II, ...) to the side takes place for the first time after about half the decomposition time and each time during the travel of the mechanical device and at the same time a sifting together with bagging of the already present fine compost is undertaken with simultaneous intensive post-comminution of the still undecomposed materials and renewed layering of the same again into a stack.

4. Device for carrying out the method according to the preceding claims, formed by a motor-driven, mechanical device unit with milling elements, which are attached thereto and rotate about largely vertical rotational axes, for the materials to be processed, as well as a circulating discharge conveyor belt, which is arranged behind the milling elements and faces laterally out of the track, for layering of the comminuted materials into a stack, characterised thereby that a preliminary compacting unit (VD) is connected upstream of the milling elements (GF), that the milling elements (GF) are constructed as oppositely rotatable milling roller pair equipped with tines and are arranged at a common cross yoke (Q, Q1) laterally relative to the overall mechanical device and are adjustable in their angle of attack (β) relative to the lateral material or stack flanks (MF).

5. Device according to claim 4, characterised thereby that the cross yoke consists of an upper (Q) and lower (Q1) plate-shaped frame, in which the axles of the milling rollers (GF) are mounted.

6. Device according to claims 4 and 5, characterised thereby that the preliminary compacter (VD) is constructed as a motor-driven or self-running pressing-down roller disposed in front of the milling roller pair (GF) in the respective travel direction (VF) of the device (V) as well as at the same height or above the milling roller pair.

7. Device according to claims 4 and 6, characterised by construction of at least a part of all units with hydraulic own drive and/or V-belt or chain drive couplings to a central drive, wherein the rollers of the milling unit and comminuting unit (GF) are driven to run fast during milling and slowly during turning of stacks (I).

8. Device according to at least one of the preceding claims, characterised thereby that instead of pivotation of the cross yoke (Q, Q1) mounted at a carrier arm (H) of the overall device (V), the overall device (V) is mounted on a wheel or caterpillar chassis to be pivotable by way of a ring gear.

9. Device according to at least one of the preceding claims, characterised by mounting and guidance of transverse yoke (Q, Q1) together with milling rollers (GF) in depending mode of construction at a crane bridge.

## Revendications

1. Procédé de broyage de matériaux organiques (R) entassés en vrac, en vue de leur compostage ou de la réalisation de matériau d'épandage pour des surfaces engazonnées,
**caractérisé** par les étapes successives suivantes :
a) précompression mécanique des matériaux (R) entassés en vrac sur le sol, par des outils de travail correspondants (VD) d'un dispositif mécanique (V) motorisé, avançant vers les matériaux et sur lequel sont montés des organes de désagrégation et de broyage (GF), tournant à haut régime et destinés à broyer les matériaux lors de passages répétés sur la même voie de passage (F), et progressivement en décalage parallèlement à cette même voie, avec en même temps la dépose et l'entassement des matériaux broyés les uns au-dessus des autres sur le côté de la voie de passage (F) jusqu'à l'atteinte d'une hauteur de meule souhaitée (I, II,...) ;
b) au bout d'un temps donné de décomposition, déplacement au moins une fois des meules entassées (I, II, ...) par le même dispositif (V) et ses organes de désagrégation et de broyage (GF), à un plus bas régime de ces derniers et, à nouveau, dépose des matériaux sur le côté de la voie de passage (F) avec entassement simultané d'une meule (I, II, ...) sur le côté opposé aux organes de désagrégation et de broyage (GF).

2. Procédé selon la revendication 1, **caractérisé** par le travail du dispositif mécanique (V) en marche avant et arrière (VR) le long de la voie de passage (F).

3. Procédé selon les revendications 1 et 2, **caractérisé** en ce que le déplacement des meules selon la revendication 1 b) s'effectue par un passage latéral le long des meules (I, II, ...) au moins une fois après environ la moitié du temps de décomposition et respectivement pendant le passage du dispositif mécanique, et on entreprend en même temps un criblage ainsi qu'un ensachage du compost fin déjà présent, ces opérations s'accompagnant d'un broyage secondaire intensif des matériaux non encore décomposés et, à nouveau, de leur entassement en une meule.

4. Dispositif pour la mise en oeuvre du procédé selon les revendications précédentes,
constitué d'une unité mécanique motorisée sur laquelle sont montés des organes de désagrégation pour les matériaux à traiter, organes qui tournent autour d'axes de rotation essentiellement verticaux,
ainsi que d'une bande transporteuse circulante d'évacuation, disposée à la suite des organes de désagrégation et dirigée sur le côté hors de la voie de passage, pour l'entassement des matériaux broyés en une meule,
**caractérisé** en ce que les organes de désagrégation (GF) sont précédés d'un équipement de précompression (VD), et en ce que les organes de désagrégation (GF) sont réalisés sous la forme d'une paire de cylindres de désagrégation pouvant être entraînés en sens contraires et garnis de dents, sont disposés sur le dispositif mécanique d'ensemble sur le côté de ce dernier sur un portique transversal commun (Q, Q₁), et leur angle d'inclinaison (β) vers le flanc latéral (MF) des matériaux ou, respectivement, des meules peut être modifié.

5. Dispositif selon la revendication 4, **caractérisé** en ce que le portique transversal est constitué d'un bâti sous la forme d'une plaque supérieure (Q) et d'une plaque inférieure (Q₁), bâti dans lequel sont montés les axes des cylindres de désagrégation (GF).

6. Dispositif selon les revendications 4 et 5, **caractérisé** en ce que l'équipement de précompression (VD) est réalisé sous la forme d'un cylindre de pression, motorisé ou de lui-même conjointement rotatif, qui est situé, dans la direction de marche respective (VR) du dispositif (V), en avant ainsi qu'à la hauteur ou au-dessus de la paire de cylindres de désagrégation (GF).

7. Dispositif selon les revendications 4 à 6, **caractérisé** par la réalisation d'au moins une partie de tous les équipements avec un entraînement hydraulique individuel et/ou des transmissions par courroies trapézoïdales ou par chaînes vers un entraînement central, les cylindres de l'équipement de désagrégation et de broyage (GF) étant entraînés en rotation rapide lors de la désagrégation et en rotation lente lors du déplacement de meules (I).

8. Dispositif selon au moins une des revendications précédentes, **caractérisé** en ce qu'au lieu du pivotement du portique transversal (Q, Q₁) monté sur un bras de support (H) sur le dispositif d'ensemble (V), le dispositif d'ensemble (V) est monté, par l'intermédiaire d'une couronne dentée (Z), à pivotement sur un châssis à roues ou à chenilles (FW).

9. Dispositif selon au moins une des revendications précédentes, **caractérisé** par l'installation et le guidage du portique transversal (Q, Q₁), pourvu des cylindres de désagrégation (GF), en suspension sur un pont de grue.
